# FASCICULE DE BREVET EUROPEEN

(11) **EP 2 005 810 B1**
(45) Date de publication et mention de la délivrance du brevet: **08.08.2018**
(21) Numéro de dépôt: 08290524.1
(22) Date de dépôt: 09.06.2008
(51) Int. Cl.: A01B 29/04

(54) **Rouleau à pneumatique semi-creux pour machine agricole, notamment rouleau combinable à un semoir ou à un outil de préparation du sol**
Walze mit Halbhohlreifen für Landwirtschaftsmaschine, insbesondere Walze, die mit einer Sämaschine oder einer Bodenvorbereitungsmaschine kombinierbar ist
Roller with a semi-hollow tyre for an agricultural machine, in particular a roller which can be combined with a seed drill or a soil-preparation tool

(30) Priorité: 19.06.2007 FR 0704359
(43) Date de publication de la demande: 24.12.2008
(73) Titulaire: OTICO, 77650 Chalmaison (FR)
(72) Inventeur: Phely, Olivier, 77520 Thenisy (FR)
(74) Mandataire: Plaçais, Jean Yves

(56) Documents cités:
- DE-A1- 3 218 635
- FR-A- 2 690 305
- FR-A- 2 804 575
- GB-A- 738 112

## Description

L'invention concerne les machines agricoles comportant un ou plusieurs rouleaux munis d'une série de pneumatiques enfilés sur un support tubulaire horizontal, ces pneumatiques présentant un profil de forme choisie, en particulier un profil en dôme, permettant de former dans la terre une série de sillons parallèles.

De tels rouleaux sont par exemple décrits dans les publications FR-A-2 763 279, FR-A-2 690 305 et FR-A-2 841 733, au nom de la Demanderesse.

Ces documents décrivent en détail les pneumatiques spéciaux utilisés, qui comprennent chacun un fourreau central propre à être enfilé sur une structure support tubulaire, et une partie de roulement à profil en dôme reliée au fourreau par deux flancs qui délimitent un volume intérieur fermé de forme annulaire, non gonflé. Cette configuration évite que la bande de roulement du pneumatique ne s'affaisse trop, tout en procurant à ce dernier une souplesse suffisante pour lui permettre de subir des déformations et d'être auto-nettoyant.

Ces rouleaux sont habituellement tirés par un tracteur en étant placés en arrière d'outils de travail du sol, le rouleau pouvant être éventuellement suivi par d'autres outils de travail.

Une application typique est celle des rouleaux pour semoirs, dans lesquels le tracteur tire une machine formée d'une combinaison d'outils semi-portés comprenant : des outils de travail du sol ; ensuite, le rouleau avec ses pneumatiques en dôme qui créent des sillons dans le sol préalablement ameubli par les outils ; puis des semoirs qui viennent déposer des graines ou des semences dans les sillons formés par le passage du rouleau ; et enfin des outils d'enfouissage pour enfouir les graines.

Dans d'autres applications, le rouleau équipé de ses pneumatiques à profil en dôme est placé derrière des outils de travail du sol, par exemple pour assurer le déchaumage du sol après une moisson. Dans ce cas, le rouleau n'est pas suivi d'outils, il sert alors essentiellement à rappuyer le sol.

Dans toutes les formes de réalisation proposées jusqu'à présent, les pneumatiques sont enfilés sur un tube cylindrique central unique, de gros diamètre, constituant la structure tubulaire supportant la série de pneumatiques.

Cette structure massive présente toutefois, par nature, un poids élevé qui ne contribue pas à l'efficacité de l'outil : en effet, par exemple pour un semoir, il ne s'agit pas de comprimer la terre, mais de former des sillons dans un sol préalablement ameubli.

De plus, la masse élevée du rouleau entraîne pour celui-ci une inertie importante. Cette inertie peut être gênante lors des déplacements sur route de la machine agricole, et lorsque le rouleau n'est pas supporté par un mécanisme de relevage, il est nécessaire de prévoir des systèmes de freinage énergiques, comme cela est par exemple décrit dans la publication FR-A-2 841 733 au nom de la Demanderesse. Enfin, le prix de revient final du rouleau est grevé de façon substantielle par le coût matière et par la main d'oeuvre nécessaire à la fabrication de ce tube de grand diamètre.

L'un des buts de l'invention est de proposer, pour un rouleau de machine agricole du type indiqué plus haut, une nouvelle configuration de structure support des pneumatiques notablement allégée par rapport à ce qui avait été proposé jusqu'à présent, ceci avec une structure plus simple et moins coûteuse à fabriquer.

L'invention propose à cet effet un rouleau de machine agricole du type défini en introduction tel que divulgué par la publication FR-A-2 763 279 précitée, c'est-à-dire un rouleau comportant une structure support tubulaire d'axe horizontal apte à être montée à rotation sur un bâti support tracté, avec une série de pneumatiques du type semi-creux à profil de forme choisie, en particulier à profil en dôme, et comprenant chacun un fourreau central propre à être enfilé sur cette structure support tubulaire et permettant de former dans la terre une série de sillons parallèles.

De façon caractéristique de l'invention, la structure support tubulaire comprend une armature formée d'une pluralité de barres réunies entre elles par deux joues circulaires d'extrémité entre lesquelles ces barres s'étendent axialement, les pneumatiques étant montés sur lesdites barres de l'armature en formant avec cette dernière un ensemble solidaire en rotation et en translation.

Très avantageusement, les pneumatiques comportent sur leur face interne des encoches orientées axialement, dont la forme et la position sont conjuguées des barres de l'armature, de manière à immobiliser en rotation relative les pneumatiques par rapport à la structure support tubulaire.

Les barres formant la structure support tubulaire peuvent être des barres rectilignes ou bien courbées en arc d'hélice. Elles peuvent être creuses, de section circulaire ou rectangulaire, ou bien plates.

Les barres sont de préférence réparties de manière uniforme à la circonférence des joues circulaires d'extrémité, et elles peuvent faire saillie radialement par rapport à la circonférence des joues d'extrémité.

Elles peuvent être également réunies entre elles par au moins une joue intermédiaire disposée dans une région médiane de l'armature.

Le rouleau de l'invention comporte de préférence des flasques d'extrémité, montés sur les joues respectives, aptes à exercer un maintien et un serrage axial de la série de pneumatiques enfilés sur ladite structure support tubulaire.

Les pneumatiques peuvent, au moins pour certains d'entre eux, être montés en appui jointif, ou bien être montés avec interposition d'entretoises annulaires intercalaires enfilées sur l'armature, de manière à définir un intervalle donné séparant axialement ces pneumatiques entre eux. Dans ce dernier cas, les entretoises annulaires peuvent comporter sur leur côté intérieur des encoches dont la forme et la position sont conjuguées des barres de l'armature, ou au contraire présenter un profil continu sur leur côté intérieur.

On va maintenant décrire des exemples de mise en oeuvre de l'invention, en référence aux dessins annexés où les mêmes références numériques désignent d'une figure à l'autre des éléments identiques ou fonctionnellement semblables.
La figure 1 est une vue en perspective, avec un détail partiellement arraché, d'un rouleau de machine agricole réalisé selon les enseignements de la présente invention.
La figure 2 est une vue en perspective de la structure support tubulaire selon l'invention, représentée de manière isolée.
La figure 3 est une vue en élévation du rouleau de la figure 1, en coupe selon la ligne III-III de la figure 5.
La figure 4 illustre, en coupe, le détail repéré IV sur la figure 3.
La figure 5 est une vue de bout, partiellement arrachée, du rouleau de la figure 1.
La figure 6 est une vue de bout de la structure support de la figure 2, représentée de manière isolée.
Les figures 7a et 7b sont des vues, respectivement en perspective et en coupe par un plan axial, d'un premier type de pneumatique susceptible d'être monté pour constituer le rouleau de la figure 1.
Les figures 8a et 8b sont des vues, respectivement en perspective et en coupe par un plan axial, d'un deuxième type de pneumatique susceptible d'être monté pour constituer le rouleau de la figure 1.
Les figures 9, 10 et 11 sont homologues de la figure 2, pour trois variantes possibles de réalisation de la structure support tubulaire selon l'invention.
Les figures 12a et 12b sont des vues, respectivement en perspective et en coupe par un plan axial, d'un pneumatique apte à être monté sur la structure support de la figure 9.
La figure 12c est homologue de la figure 12b, pour un pneumatique apte à être monté sur la structure support de la figure 11.
La figure 13 est une vue analogue à la figure 3 dans une variante de réalisation où les pneumatiques ont un profil en double dôme, ou dôme jumelé.
La figure 14 illustre, en coupe, le détail repéré XIV sur la figure 13.

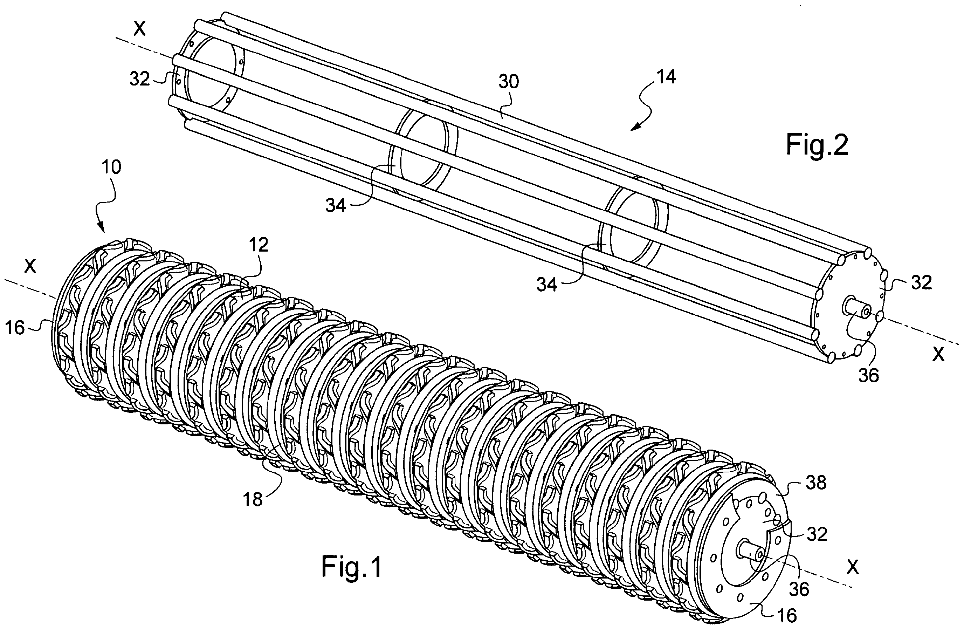

Sur les figures 1 à 6, on a illustré une première forme de réalisation d'un rouleau de machine agricole selon l'invention.

Ce rouleau, désigné de façon générale par la référence 10, comprend une série de pneumatiques semblables 12 enfilés successivement sur une structure support tubulaire 14 montée à rotation autour d'un axe horizontal X-X.

Les pneumatiques sont enfilés de façon jointive les uns contre les autres et maintenus à chaque extrémité de l'empilement par des flasques d'extrémité 16 assurant le serrage et le maintien des pneumatiques les uns contre les autres. On pourra se référer à la publication FR-A-2 841 733 précitée, ainsi qu'à la publication FR-A-2 784 331, toutes deux au nom de la Demanderesse, pour plus de détails sur la manière de réaliser un tel rouleau à partir d'un empilement de pneumatiques.

L'empilement des pneumatiques forme avec la structure tubulaire qui les supporte un ensemble solidaire se présentant sous la forme d'un rouleau susceptible d'être monté sur un bâti (non représenté) d'une machine agricole comportant d'autres éléments (semoir, timon, etc.), et tracté de façon perpendiculaire à la direction axiale XX du rouleau 10. Les dimensions typiques (longueur x diamètre) d'un tel rouleau sont de 3000 x 600 mm.

Par réaction des pneumatiques sur le sol, le déplacement du bâti entraîne la rotation du rouleau 10 mené, et les pneumatiques créent dans le sol des sillons parallèles entre eux, sillons dans lesquels pourront par exemple être semées des graines. L'espacement entre les sillons correspond à l'intervalle entre les bandes de roulement des pneumatiques adjacents, par exemple 125 mm. Pour ajuster cet espacement, par exemple à 150 mm, il est éventuellement possible de placer entre les pneumatiques adjacents des entretoises annulaires intercalaires 18, dont la largeur en direction axiale sera choisie en fonction de l'écart voulu pour les sillons.

Le pneumatique spécial approprié à l'usage que l'on vient d'indiquer est du type général décrit dans la publication FR-A-2 763 279 précitée, c'est-à-dire un pneumatique dont la partie destinée à venir en contact avec le sol à travailler (ou avec la chaussée de la route, dans le cas d'un rouleau permettant un usage mixte) est une partie formant bande de roulement à profil en dôme, c'est-à-dire un profil arrondi convexe.

Un tel profil comporte généralement un seul dôme, mais il peut aussi, le cas échéant, comporter un double dôme, aussi appelé dôme jumelé. La forme du dôme peut être variée en fonction des applications, c'est-à-dire plus ou moins prononcée ou aplatie. A titre d'exemple, la hauteur du dôme peut être comprise entre 10 et 100 mm pour une largeur de pneumatique de 80 à 400 mm, ces valeurs étant purement indicatives. L'invention s'étend également à d'autres types de profils, notamment à des profils aplatis. La surface extérieure du profil, en particulier du ou des dômes, peut être lisse ou munie de crampons définissant des reliefs positifs ou négatifs.

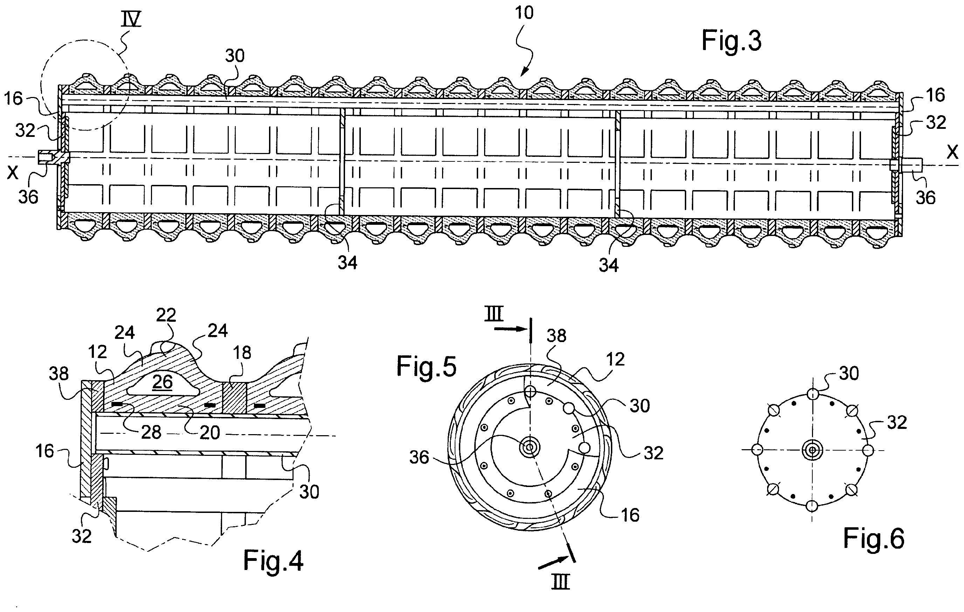

La structure d'un tel pneumatique comprend, comme illustré en coupe sur la figure 4, un fourreau central 20 destiné à être enfilé sur la structure support du rouleau, et relié à la partie 22 formant bande de roulement par deux flancs opposés 24, la partie 20 formant fourreau étant élargie par rapport à la bande de roulement 22.

Les flancs 24 définissent à l'intérieur du pneumatique un espace annulaire 26 de section transversale par rapport à la section transversale du profil d'ensemble en dôme du pneumatique. Cet espace annulaire creux 26 n'est pas gonflé, il peut communiquer avec le milieu ambiant par l'intermédiaire d'un orifice (non représenté) traversant l'épaisseur du fourreau 20, pour assurer l'équilibrage des pressions en utilisation. Il est en effet souhaitable que le pneumatique puisse se déformer quelque peu dans la région comprise entre la bande de roulement 22 et le fourreau 20 pour faciliter le décollement de la terre qui, sinon, aurait tendance à adhérer au pneumatique dans la région des flancs 24. Cette déformation du pneumatique, qui lui procure une souplesse suffisante pour amortir les déformations et être autonettoyant, est cependant limitée par la forme en dôme, qui évite que la bande de roulement ne s'affaisse de façon excessive.

Le fourreau central 20 peut être mécaniquement renforcé par un ou plusieurs câbles torsadés ou un jonc métallique 28 noyé dans la matière du pneumatique, en particulier pour assurer un meilleur maintien sur la structure support en dépit des sollicitations mécaniques reçues par le pneumatique, qui peuvent être assez intenses et brutales, notamment sur route.

De façon caractéristique de l'invention, la structure support 14 est constituée non pas d'un cylindre métallique, comme dans la technique antérieure, mais d'une armature formée d'une pluralité de barres 30 réunies entre elles à leurs extrémités respectives par des joues circulaires d'extrémité 32 (figure 2).

Les barres 30 sont au nombre de huit dans l'exemple illustré, mais elles peuvent être en nombre inférieur (au moins trois) ou supérieur. Elles sont de préférence réparties de manière uniforme à la circonférence des joues d'extrémité 32. De plus, dans l'exemple illustré, elles font saillie radialement par rapport à la circonférence des joues d'extrémité 32.

Les barres 30 définissent un volume enveloppe sensiblement tubulaire dont le diamètre extérieur correspond au diamètre des pneumatiques destinés à être montés sur cette structure (typiquement, un diamètre de 600 mm). Dans l'exemple illustré, les barres 30 sont des barres creuses, présentant une section circulaire avec un diamètre individuel externe de 80 mm.

Des joues intermédiaires 34 peuvent être disposées dans des régions médianes de l'armature, de manière à rigidifier celles-ci en évitant une flexion trop prononcée des barres 30 à cet endroit.

Les joues circulaires d'extrémité 32 portent chacune un moyeu 36 permettant de monter le rouleau à rotation sur le bâti support d'une machine agricole, pour tracter le rouleau dans une direction perpendiculaire à sa direction axiale X-X.

Comme on peut le voir sur la partie écorchée des figures 1 et 5, les entretoises intercalaires 18 séparant deux pneumatiques adjacents, ainsi que les entretoises d'extrémité 38 disposées entre le dernier pneumatique de la série et le flasque d'extrémité 16, sont munies d'encoches dont la forme et la position correspondent aux différents tubes 30 de l'armature. Ces encoches permettent de solidariser en rotation les entretoises 18 et 38 à l'armature de la structure support 14. En variante, elles peuvent toutefois être remplacées par un profil continu côté intérieur des entretoises.

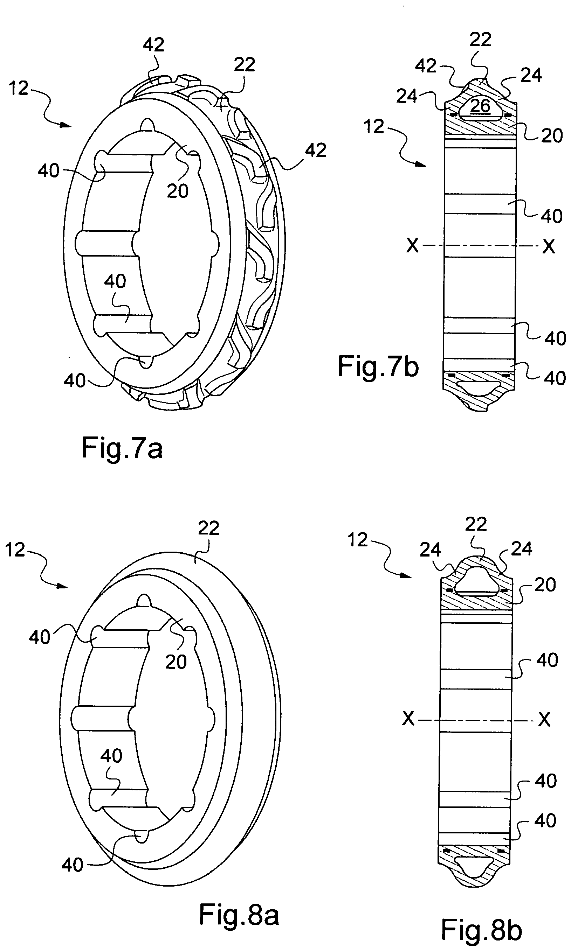

Les figures 7a et 7b illustrent un exemple de pneumatique adapté à un montage sur l'armature de la figure 2, pour constituer le rouleau illustré figure 1.

Le pneumatique 12 est un pneumatique d'un type connu, semi-creux à profil en dôme tel que décrit plus haut. Il comporte sur sa face interne, c'est-à-dire du côté du fourreau 20 destiné à venir en contact avec la structure support 14, des encoches 40 orientées axialement.

La forme et la position des encoches 40 correspondent aux barres 30 de l'armature, de manière à immobiliser en rotation relative les pneumatiques par rapport à l'armature qui les supporte. Cette caractéristique n'est cependant pas indispensable, et les pneumatiques peuvent éventuellement présenter une face interne lisse dès lors que le serrage de ceux-ci, notamment du fait de leur élasticité radiale, est suffisant pour empêcher tout glissement relatif en rotation par rapport à la structure qui les supporte, et ce dans la majeure partie des conditions de travail susceptibles d'être rencontrées par le rouleau.

Dans la forme de réalisation illustrée figures 7a et 7b, le pneumatique comporte en outre sur sa bande de roulement 22 des crampons tels que 42, formés à la périphérie du pneumatique et répartis en direction circonférentielle. En particulier, la présence de ces crampons introduit une discontinuité dans le sillon lorsque le rouleau se déplace pour former les sillons dans le sol, ce qui favorise l'émiettement du sol et la création de zones de fracture capables de capter l'eau en cas de pluie et limiter le ruissellement le long du sillon, notamment sur un terrain en pente.

Il est toutefois possible, en variante, de monter sur la structure support 14 des pneumatiques dont la bande de roulement est lisse.

Les figures 8a et 8b illustrent un exemple d'un tel pneumatique lisse, qui permet notamment une utilisation en combinaison avec des grattoirs positionnés entre les pneumatiques, grattoirs dont l'action ne sera pas gênée par la présence de crampons sur la bande de roulement.

De nombreuses variantes de réalisation de l'armature constituant la structure support 14 peuvent être envisagées.

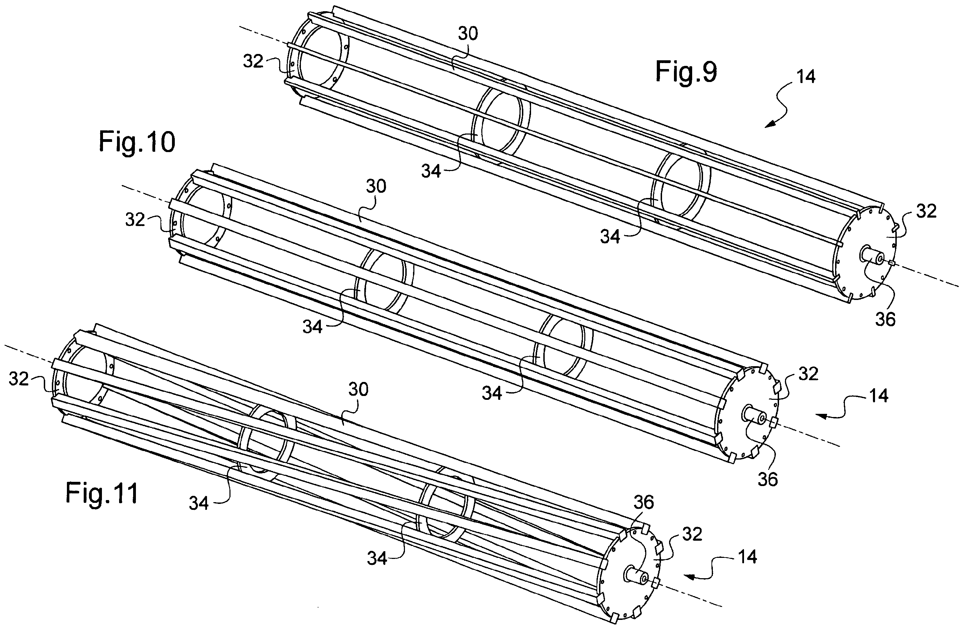

Ainsi, sur la variante illustrée figure 9, les tubes creux de section circulaire de la figure 2 ont été remplacés par des barres 30 en forme de méplats dont la plus grande direction est orientée radialement, de manière à permettre un meilleur assujettissement des pneumatiques lorsque ceux-ci sont enfilés sur l'armature 14. Ces barres peuvent par exemple présenter une section de 40 x 80 mm.

Sur la variante illustrée figure 10, les barres 30 sont constituées de tubes creux à section carrée, par exemple de 80 x 80 mm.

Dans les différentes formes de réalisation présentées figure 2, 9 et 10, les barres 30 sont rectilignes, c'est-à-dire qu'elles s'étendent le long de génératrices d'un cylindre droit dont la directrice serait constituée par la circonférence des joues d'extrémité 36.

Cette configuration n'est cependant pas limitative : en effet, comme illustré figure 11, on peut prévoir de courber les barres 30 pour leur donner sensiblement la forme d'un arc d'hélice, avec par exemple un décalage de 1/8^{e} de tour entre les deux joues d'extrémité 32.

La face intérieure des pneumatiques 12, en contact avec l'armature support 14, est adaptée en tant que de besoin à la configuration particulière de l'armature.

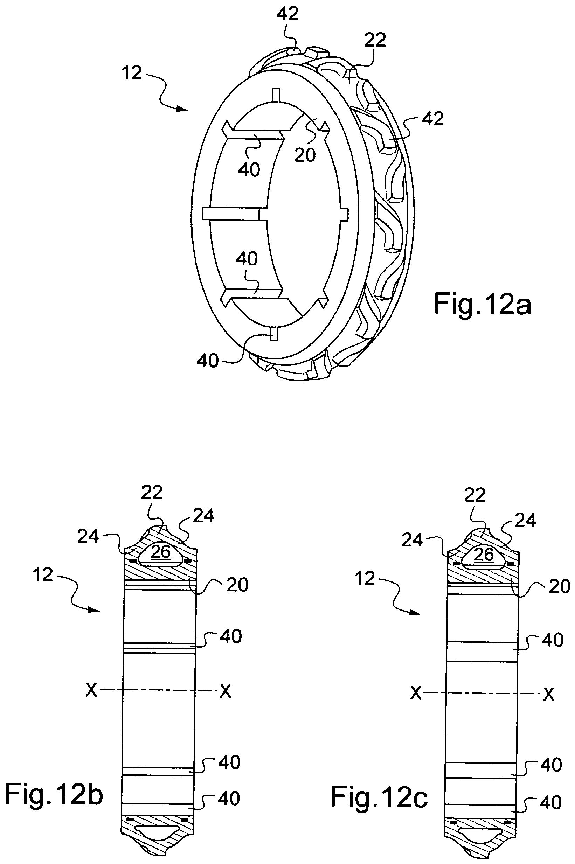

Ainsi, les figures 12a et 12b sont homologues des figures 7a et 7b pour une armature dont les barres sont constituées de méplats à section rectangulaire : dans ce cas, les encoches 40 formée sur la face interne du pneumatique sont des encoches de section rectangulaire, dont la profondeur et la largeur sont adaptées à la section des méplats constituant les barres de l'armature support.

La figure 12c illustre un exemple de pneumatique adapté à une armature dont les barres ne sont pas rectilignes, mais courbées en arc d'hélice comme illustré sur la figure 11 : les encoches 40 doivent alors, comme illustré, présenter une forme homologue de cette configuration particulière des barres de l'armature.

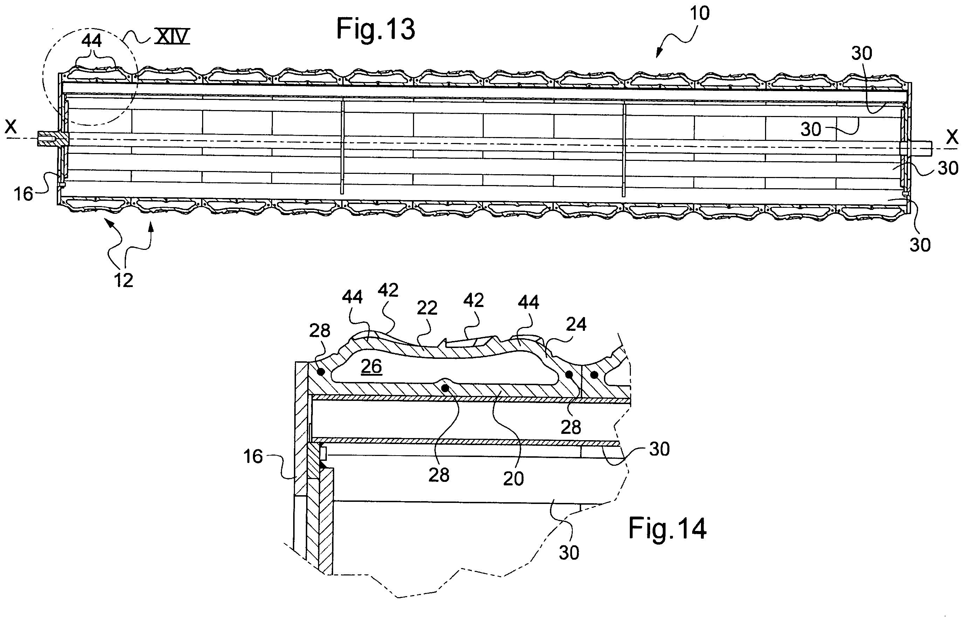

La figure 13 représente en coupe un rouleau analogue à celui de la figure 3. Toutefois le profil de chacun des pneumatiques 12 comporte deux dômes 44 espacés et moins prononcés que dans le cas de la figure 3, c'est-à-dire de plus faible hauteur. En outre chaque pneumatique 12 présente une largeur plus grande que dans le cas de la figure 3. Il en résulte que le profil du pneumatique est sensiblement aplati.

Le détail de la figure 14 montre que la partie 22 formant bande de roulement comporte deux dômes 44, encore appelés « dômes jumelés ». Dans l'exemple de réalisation, les dômes 44 sont munis de crampons 42, mais ils pourraient aussi être à surface lisse. La partie 22 est reliée au fourreau central 20 par deux flancs opposés 24. Un espace annulaire 26 de section transversale aplatie est ainsi délimité à l'intérieur du profil du pneumatique. Des câbles de renforcement 28 sont noyés dans la matière du pneumatique pour assurer un renfort mécanique.

## Revendications

1. Rouleau de machine agricole, notamment rouleau combinable à un semoir ou à un outil de préparation du sol, ce rouleau (10) comportant une structure support tubulaire (14) d'axe horizontal (X-X) apte à être montée à rotation sur un bâti support tracté, avec une série de pneumatiques (12) du type semi-creux à profil de forme choisie, en particulier à profil en dôme, comprenant chacun un fourreau central (20) propre à être enfilé sur cette structure support tubulaire, et permettant de former dans la terre une série de sillons parallèles,
**caractérisé en ce que** ladite structure support tubulaire (14) comprend une armature formée d'une pluralité de barres (30) réunies entre elles par deux joues circulaires d'extrémité (32) entre lesquelles ces barres s'étendent axialement, et **en ce que** les pneumatiques (12) sont montés sur lesdites barres de l'armature en formant avec cette dernière un ensemble solidaire en rotation et en translation.

2. Rouleau selon la revendication 1, **caractérisé en ce que** les pneumatiques (12) comportent sur leur face interne (20) des encoches (40) orientées axialement, dont la forme et la position sont conjuguées des barres (30) de l'armature, de manière à immobiliser en rotation relative les pneumatiques par rapport à la structure support tubulaire.

3. Rouleau selon l'une des revendications 1 et 2, **caractérisé en ce que** les barres (30) formant ladite structure support tubulaire (14) sont des barres rectilignes.

4. Rouleau selon l'une des revendications 1 et 2, **caractérisé en ce que** les barres (30) formant ladite structure support tubulaire (14) sont des barres courbées en arc d'hélice.

5. Rouleau selon l'une des revendications 1 à 4, **caractérisé en ce que** les barres (30) formant ladite structure support tubulaire (14) sont des barres creuses.

6. Rouleau selon la revendication 5, **caractérisé en ce que** lesdites barres (30) sont des barres de section circulaire ou de section rectangulaire.

7. Rouleau selon l'une des revendications 1 à 4, **caractérisé en ce que** les barres (30) formant ladite structure support tubulaire (14) sont des barres plates.

8. Rouleau selon l'une des revendications 1 à 7, **caractérisé en ce que** les barres (30) sont réparties de manière uniforme à la circonférence des joues circulaires d'extrémité (32) .

9. Rouleau selon l'une des revendications 1 à 8, **caractérisé en ce que** les barres (30) font saillie radialement par rapport à la circonférence des joues d'extrémité (32).

10. Rouleau selon l'une des revendications 1 à 9, **caractérisé en ce que** les barres (30) sont également réunies entre elles par au moins une joue intermédiaire (34) disposée dans une région médiane de l'armature.

11. Rouleau selon l'une des revendications 1 à 10, **caractérisé en ce qu'**il comporte en outre des flasques d'extrémité (16), montés sur les joues respectives (32), aptes à exercer un maintien et un serrage axial de la série de pneumatiques (12) enfilés sur ladite structure support tubulaire (14) .

12. Rouleau selon l'une des revendications 1 à 11, **caractérisé en ce qu'**au moins certains des pneumatiques (12) sont montés en appui jointif entre eux.

13. Rouleau selon l'une des revendications 1 à 12, **caractérisé en ce qu'**il comprend également des entretoises annulaires intercalaires (18) enfilées sur l'armature entre au moins certains des pneumatiques (12), de manière à définir un intervalle donné séparant axialement ces pneumatiques entre eux.

14. Rouleau selon la revendication 13, **caractérisé en ce que** lesdites entretoises annulaires intercalaires (18) comportent sur leur côté intérieur des encoches dont la forme et la position sont conjuguées des barres de l'armature.

15. Rouleau selon la revendication 13, **caractérisé en ce que** lesdites entretoises annulaires intercalaires (18) présentent un profil continu sur leur côté intérieur.

## Patentansprüche

1. Landwirtschaftsmaschinenwalze, insbesondere mit einer Sämaschine oder einem Bodenvorbereitungsgerät kombinierbare Walze, wobei die Walze (10) eine röhrenförmige Trägerstruktur (14) mit horizontaler (X-X)-Achse umfasst, die zur drehbaren Lagerung auf einem gezogenen Trägerrahmen geeignet ist, mit einer Reihe von Reifen (12) der halbhohlen Art mit ausgewähltem Laufflächenprofil, insbesondere einem kuppelförmigen Profil, umfassend jeweils einen zum Aufziehen auf diese röhrenförmige Trägerstruktur geeigneten zentralen Mantel (20), und die es erlaubt, in der Erde eine Reihe von parallelen Furchen zu bilden,
**dadurch gekennzeichnet, dass** die röhrenförmige Trägerstruktur (14) ein Gestell umfasst, das aus einer Vielzahl von Stangen (30) gebildet ist, die untereinander durch zwei kreisförmige Endflansche (32) verbunden sind, zwischen denen sich diese Stangen axial erstrecken, und dadurch, dass die Reifen (12) auf den Stangen des Gestells unter Bildung mit Letzterem einer dreh- und translationsverschieblich fest verbundenen Einheit montiert sind.

2. Walze nach Anspruch 1, **dadurch gekennzeichnet, dass** die Reifen (12) auf ihrer Innenfläche (20) axial orientierte Einkerbungen (40) aufweisen, deren Form und Position so auf die Stangen (30) des Gestells abgestimmt sind, dass die Reifen in Drehung, relativ in Bezug auf die röhrenförmige Trägerstruktur, unbeweglich gemacht werden.

3. Walze nach einem der Ansprüche 1 und 2, **dadurch gekennzeichnet, dass** die Stangen (30), die die röhrenförmige Trägerstruktur (14) bilden, geradlinige Stangen sind.

4. Walze nach einem der Ansprüche 1 und 2, **dadurch gekennzeichnet, dass** die Stangen (30), die die röhrenförmige Trägerstruktur (14) bilden, spiralbogenförmig gekrümmte Stangen sind.

5. Walze nach einem der Ansprüche 1 bis 4, **dadurch gekennzeichnet, dass** die Stangen (30), die die röhrenförmige Trägerstruktur (14) bilden, hohle Stangen sind.

6. Walze nach Anspruch 5, **dadurch gekennzeichnet, dass** die Stangen (30) Stangen mit kreisförmigem Querschnitt oder mit rechteckigem Querschnitt sind.

7. Walze nach einem der Ansprüche 1 bis 4, **dadurch gekennzeichnet, dass** die Stangen (30), die die röhrenförmige Trägerstruktur (14) bilden, flache Stangen sind.

8. Walze nach einem der Ansprüche 1 bis 7, **dadurch gekennzeichnet, dass** die Stangen (30) gleichmäßig um den Umfang der kreisförmigen Endflansche (32) verteilt sind.

9. Walze nach einem der Ansprüche 1 bis 8, **dadurch gekennzeichnet, dass** die Stangen (30) bezüglich des Umfangs der Endflansche (32) radial hervorstehen.

10. Walze nach einem der Ansprüche 1 bis 9, **dadurch gekennzeichnet, dass** die Stangen (30) untereinander durch mindestens einen, in einem Mittelbereich des Gestells angeordneten, mittleren Flansch (34) ebenfalls verbunden sind.

11. Walze nach einem der Ansprüche 1 bis 10, **dadurch gekennzeichnet, dass** sie des Weiteren auf den jeweiligen Flanschen (32) montierte Endflansche (16) umfasst, die geeignet sind, eine axiale Spannung der Reihe von auf die röhrenförmige Trägerstruktur (14) aufgezogenen Reifen (12) auszuüben und aufrecht zu erhalten.

12. Walze nach einem der Ansprüche 1 bis 11, **dadurch gekennzeichnet, dass** mindestens einige der Reifen (12) untereinander stützend verbunden montiert sind.

13. Walze nach einem der Ansprüche 1 bis 12, **dadurch gekennzeichnet, dass** sie auch ringförmige, zwischenliegende Abstandshalter (18) aufweist, die zwischen mindestens einigen der Reifen (12) so das Gestell aufgezogen sind, dass ein gegebenes, diese Reifen axial trennendes Intervall zwischen ihnen definiert wird.

14. Walze nach Anspruch 13, **dadurch gekennzeichnet, dass** die ringförmigen, zwischenliegenden Abstandshalter (18) auf ihrer Innenseite Einkerbungen aufweisen, deren Form und Position auf die Stangen des Gestells abgestimmt sind.

15. Walze nach Anspruch 13, **dadurch gekennzeichnet, dass** die ringförmigen, zwischenliegenden Abstandshalter (18) ein durchgängiges Profil auf ihrer Innenseite aufweisen.

## Claims

1. Roller of an agricultural machine, notably a roller that can be combined with a seed drill or a ground preparation tool, this roller (10) comprising a tubular support structure (14) of horizontal axis (X-X) adapted to be rotatably mounted on a tractor-drawn support frame, with a series of semi-hollow tyres (12) having a profile of a selected shape, particularly a dome-shaped profile, each of which comprises a central sleeve (20) adapted to be threaded onto this tubular support structure, and enabling a series of parallel furrows to be formed in the earth,
**characterized in that** the tubular support structure (14) comprises a framework made up of a plurality of bars (30) joined together by two circular end cheeks (32) between which these bars extend axially, and **in that** the tyres (12) are mounted on said bars of the framework, forming with the latter an assembly that is connected for rotation and translation.

2. Roller according to claim 1, **characterized in that** the tyres (12) comprise on their inner surface (20) axially oriented notches (40), the shape and position of which are matched to the bars (30) of the framework, so as to prevent the tyres from rotating relative to the tubular support structure.

3. Roller according to one of claims 1 and 2, **characterized in that** the bars (30) forming the tubular support structure (14) are straight bars.

4. Roller according to one of claims 1 and 2, **characterized in that** the bars (30) forming the tubular support structure (14) are bars curved in the shape of a helical arc.

5. Roller according to one of claims 1 to 4, **characterized in that** the bars (30) forming the tubular support structure (14) are hollow bars.

6. Roller according to claim 5, **characterized in that** the bars (30) are bars of circular or rectangular section.

7. Roller according to one of claims 1 to 4, **characterized in that** the bars (30) forming the tubular support structure (14) are flat bars.

8. Roller according to one of claims 1 to 7, **characterized in that** the bars (30) are uniformly distributed around the circumference of the circular end cheeks (32).

9. Roller according to one of claims 1 to 8, **characterized in that** the bars (30) project radially relative to the circumference of the end cheeks (32).

10. Roller according to one of claims 1 to 9, **characterized in that** the bars (30) are also joined together by at least one intermediate cheek (34) arranged in a median region of the framework.

11. Roller according to one of claims 1 to 10, **characterized in that** it further comprises end flanges (16) mounted on the respective cheeks, adapted to hold and axially grip the series of tyres threaded onto said tubular support structure (14).

12. Roller according to one of claims 1 to 11, **characterized in that** at least some of the tyres (12) are mounted adjacent to one another.

13. Roller according to one of claims 1 to 12, **characterized in that** it also comprises intercalary annular spacers (18) threaded on the framework between at least some of the tyres (12), so as to define a given interval that axially separates these tyres from one another.

14. Roller according to claim 13, **characterized in that** the intercalary annular spacers (18) comprise, on their inner side, notches the shape and position of which are matched to the bars of the framework.

15. Roller according to claim 13, **characterized in that** the intercalary annular spacers (18) have a continuous profile on their inner side.
